(19)

Europäisches Patentamt

European Patent Office

Office européen des brevets

(11) **EP 4 086 158 A1**

(12) **EUROPEAN PATENT APPLICATION**
published in accordance with Art. 153(4) EPC

(43) Date of publication:
**09.11.2022 Bulletin 2022/45**

(21) Application number: **20911142.6**

(22) Date of filing: **02.01.2020**

(51) International Patent Classification (IPC):
**B63B 32/60** (2020.01)    **B63B 34/40** (2020.01)
**B63B 1/24** (2020.01)

(52) Cooperative Patent Classification (CPC):
**B63B 1/24; B63B 32/60; B63B 34/40**

(86) International application number:
**PCT/ES2020/070001**

(87) International publication number:
**WO 2021/136853 (08.07.2021 Gazette 2021/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Valera Ruiz de la Sierra, Francisco
Javier**
**18697 La Herradura - Granada (ES)**

(72) Inventor: **Valera Ruiz de la Sierra, Francisco Javier**
**18697 La Herradura - Granada (ES)**

(74) Representative: **Urizar Anasagasti, Jesus Maria et
al**
**IPAMARK, S.L.**
**C/ Segre 27- 1°**
**28002 Madrid (ES)**

(54) **HYDROFOIL FOR SMALL VESSELS**

(57)    The invention relates to a hydrofoil for small vessels (1), comprising a front foil set (3) formed by a wing (32), with marked negative dihedral, which is attached to the vessel (1) by means of two struts (31), of circular or quasi-circular section, and a rear foil set (2) formed by a wing (22) that is flat or with minimal dihedral, attached to the vessel (1) by means of two struts (21); the front (3) and rear (2) foil sets being positioned longitudinally forward and aft, respectively, of the overall centre of gravity of the vessel, including also the pilot and/or crew.

Fig. 1

EP 4 086 158 A1

**Description**

**Technical field**

The object of the present invention is applicable in the naval industry field, and more specifically in the construction of small nautical sport and recreational vessels, as it is a hydrofoil which implements a particular hydrodynamic and structural configuration that is useful in lifting small vessels so that they can travel at a certain height above the surface of the water.

**State of the art**

There are numerous vessel lift systems, known as a hydrofoil, for lifting not only small vessels such as hydrofoils for windsurf and kitesurf boards or sailboards, but also for large sailboats or ships.

The main differences between the new system and those in existence, besides their hydrodynamic and structural morphology, consist of the following:
Small hydrofoil systems for windsurf and kitesurf boards or sailboards require constant adjustment of the longitudinal position of the centre of gravity by means of the adjustment of the longitudinal position of the crew according to the flight/sailing conditions, primarily speed. This is because the hydrodynamic configurations used have a behaviour such that, when the wing approaches the surface of the water, they tend to continue to move upwards and pull the wing out of the water. This tendency translates into, as the vehicle increases in speed, the centre of gravity being moved forward so as to prevent the wing from coming out of the water, which would result in a complete loss of control of the vessel.

As regards the lateral behaviour, these systems are usually limited in their lateral manoeuvrability due to the small margin of lateral positioning of the centre of gravity to maintain lateral stability, which translates into a marked tendency for the vessel to flip over, which makes it rather difficult to manoeuvre while the vessel is in flight.

Large hydrofoil systems for sailboats or ships use a number of different hydrofoil configurations, the position and/or incidence of which is regulated by means of control systems which allow the stability and manoeuvrability of the vessel in different flight conditions.

**Description of the invention**

Based on the prior art, the objective of the present invention is to provide a hydrofoil for small vessels, which is self-stabilising in the longitudinal plane of the vessel for a wide longitudinal position range of the centre of gravity without any mechanism actuation, while at the same time allowing lateral manoeuvrability of the vessel by means of the lateral shifting of the centre of gravity.

In order to achieve the proposed objectives, the invention proposes a hydrofoil which has the features of claim 1.

The present invention describe a system which, unlike small hydrofoil systems, allows the flight to remain stable as flight speed varies, by correcting the tendency for the wing to come out of the water, replacing it with a tendency for the angle of attack to decrease as the speed increases and to increase as the speed decreases, flying at near constant lift over a wide flight speed range, resulting in the vessel remaining at a nominally constant height above the water as the flight/sailing speed varies.

The proposed hydrofoil system also substantially expands the lateral positioning range of the centre of gravity, which largely favours carrying out lateral manoeuvres by means of the lateral displacement of the centre of gravity with respect to the axis of the vessel.

Furthermore, with respect large hydrofoil systems for sailboats or ships, the main difference is based on the fact that stability is obtained passively, i.e., without the need for actuating any control system and in that lateral manoeuvrability is nominally obtained by means of the lateral shifting of the pilot/crew themselves.

As a complement to the description provided herein, and for the purpose of helping to make the features of the invention more readily understandable, the present specification is accompanied by a set of drawings which, by way of illustration and not limitation, represent the following:

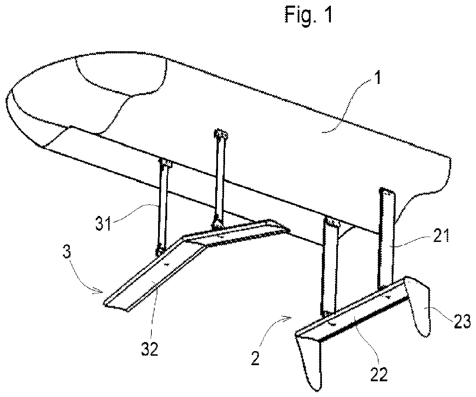

-   Figure 1 shows a perspective view of the hydrofoil object of the invention.
-   Figure 2 depicts bottom plan and side elevational views of this device in which dimension marks have been placed, showing the proportions that can be achieved in various dimensions.

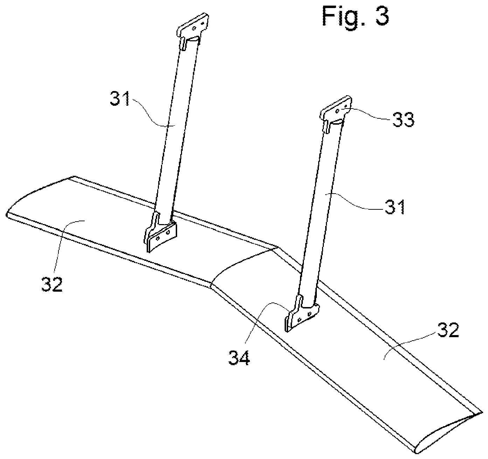

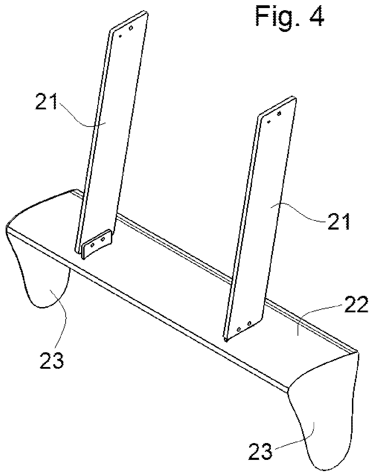

-   Figures 3 and 4 are views of the front and rear foil sets of this hydrofoil, respectively.

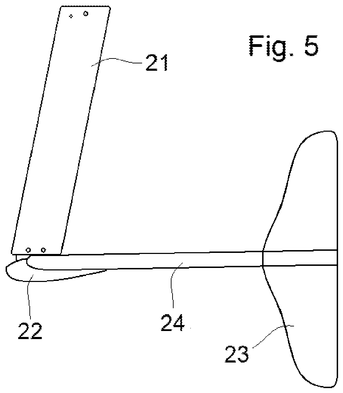

-   Figure 5 shows a side view of an alternative embodiment of the rear foil set of a variant of the hydrofoil of the invention.

**Detailed description of the embodiments**

Essentially, the invention basically consists of two wings (32, 22) attached to the vessel (1) by means of two struts (31, 21) each. Hereinafter, these wing assemblies with two struts will be referred to as "foil sets". A front foil set (3) is thereby provided, the longitudinal location of which will be forward with respect to the overall centre of gravity of the vessel, also including the pilot and/or crew. In turn, the rear foil set (2) has a rearward longitudinal location with respect to the overall centre of gravity of the vessel + pilot/crew.

In the invention, wings with a mean geometric chord media of around 20 cm are used, and this length will be referred to hereinafter as characteristic chord (C). In general, wings with a chord of 15 to 25 cm are used, because in this way, the wing goes through the dirty area of the water while sailing (speaking in hydrodynamic terms), which is the area on surface which gives it the greatest stability. This is where it differs from systems which try to avoid this dirty area, while the present patent seeks this area in order to increase stability.

With respect to the plan shape of the wings (32, 22), straight wings or wings that flare at the tips are used, unlike the wings used in aeronautics, which are usually flared at the tips. If the flaring parameter ($\lambda$) is defined as the ratio between the tip chord ($c_t$) and the root chord ($c_r$), wings with a flaring parameter of between 1 (wing straight) and 3 are used.

$$\lambda = \frac{c_t}{c_r} = [1,3]$$

For constructive simplicity, straight wings are used, although tip flaring is used when lateral stability of the vehicle is intended to be increased.

With respect to the span of the wings (32, 22), spans of between 4 and 8 characteristic chords (80-160 cm) are generally used, while larger spans are used in the embodiment corresponding to light sailing vessels, as will be described in detail in the corresponding section.

With respect to the deflection of the wings (32, 22), wings without any deflection are normally used, although the use of wings with moderate deflection is contemplated for aesthetic purposes in order to delay the effects of cavitation in high-speed vehicles, or to avoid entanglement and entrainment of debris that may be found in the aquatic environment.

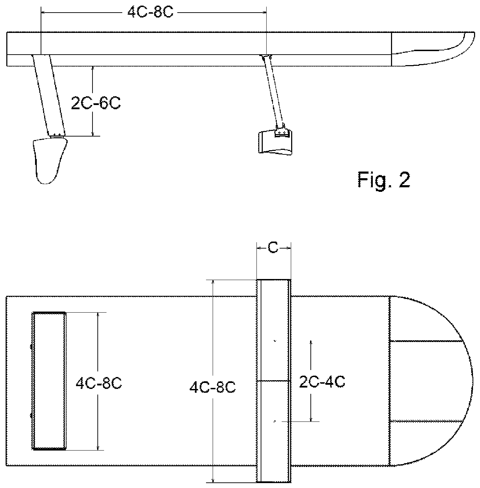

With respect to the location of the points for locking the struts to the wings, these are equidistant with respect to the plane of symmetry of the wing and have a separation between one another of between 2 and 4 characteristic chords (40-80 cm). See Figure 2.

As for the particular features of the front foil set (3), it should be mentioned that the wing (32) has a marked negative dihedral (>10 degrees).

The struts (31) of the front foil set (3) are of circular or quasi-circular section, such that when the vehicle is sailing with slip, the hydrodynamic lateral forces produced on said struts (31) are very low; therefore, they will never be flat so that they do not exert lift.

In turn, the rear foil set (2) has a wing (22) that is normally flat, although it may exhibit a certain dihedral.

The struts (21) of the rear foil set (2) are either flat or have a symmetrical hydrodynamic profile. In both cases, it is intended that, when the vehicle is sailing with slip, significant lateral forces are produced which enhance the directional stability of the vehicle when said struts (21) are submerged or partially submerged. That is, when the vehicle is floating, taking off, or in flight at a low speed. The embodiment of the struts (21) in a symmetrical aerodynamic profile is only contemplated to reduce the drag caused by said struts.

Vertical fins (23) in the form of keels are installed at the tips of wing of the rear wing (22) which are responsible for the directional stability of the vehicle. Said fins (23) are installed directly at the tips of the rear wing (22). In an alternative embodiment, said rear wings (22) are mounted on horizontal masts (24) which are attached to the tips of the wing (22) and allow the longitudinal location of said fins (23) in more forward or rearward positions with respect to the longitudinal position of the tips of the wing. The longitudinal location of these fins largely determines the behaviour of the vehicle in lateral manoeuvres, so being able to modify their longitudinal installation position is extremely important in order to configure how the vehicle is driven.

As for the longitudinal location of the front (3) and rear (2) foil sets, it should be pointed out that they are installed with a longitudinal separation of between 4 and 8 chords (80-160 cm) between one another, and such that the centre of gravity of the vehicle is located between both.

The struts (31, 21) of the front (3) and rear (2) foil sets have a length of between 2 and 6 characteristic chords (40-120 cm). It should be noted that the two struts can be replaced with one strut, but when there are two, each of them withstands less stress, and when they are detachable, it is easier to put them in place as they would require a less robust fixing mechanism as they withstand less stress than if there were only one strut.

The preferred embodiment of the invention is a hydrofoil jet ski. Said embodiment is the result of the installation of the above description on a small hull measuring 200-300 cm in length 80-120 cm in width, provided with a drive system based on a spark-ignition engine or an electric engine with propeller or water jet drive.

There is arranged on said hull a seat which allows the pilot to straddle the hull, and a handlebar the turning of which allows directional control of the vehicle by means of lateral deflection of the thrust produced by the propeller or water jet, or else by means of the deflection of one or two rear vertical fins in the form of a rudder.

The propeller or water jet outlet nozzle is installed in a centred and rearward position with respect to the rear foil set and at a height coinciding with the height of the rear wing, within a range of +/-1 characteristic chord.

Gas or power control is actuated by means of a trigger or grip installed on one of the handlebars.

In this embodiment of the invention, there is a control for regulating the height of the vehicle above the surface of the water. Said control is performed by means of regulating the angle of relative incidence of the front wing (32). The implementation of this regulation of the angle is contemplated in three different ways:

- By means of the actuation of ailerons on the trailing edge of the wing.
- By means of the turning of the entire wing (32) with respect to its anchoring (33, 34) to the struts.
- By means of the turning of the entire front foil set (3) with respect to the hull of the vessel (1).

Four different ways of actuating this control are contemplated:

- By means of the grip installed on one side of the handlebars.
- By means of hand lever (type of brake) installed on one side of the handlebars.
- By means of a pedal operated by one of the feet of the pilot.
- By means of the longitudinal displacement of the handlebar.

Actuation of this control results in an increase in the incidence of the front wing (32), which causes the vehicle to accommodate a greater angle of attack and a greater height above the water.

Having sufficiently described the nature of the invention, in addition to a preferred exemplary embodiment, it is hereby stated for the relevant purposes that the materials, shape, size and layout of the described elements may be modified, provided that it does not imply altering the essential features of the invention claimed below.

**Claims**

1. A hydrofoil for small vessels (1), **comprising:**

   - a front foil set (3) formed by a wing (32), with marked negative dihedral, which is attached to the vessel (1) by means of two struts (31), of circular or quasi-circular section, such that when the vessel is sailing with slip, the hydrodynamic lateral forces produced on said struts (31) are very low;
   - a rear foil set (2) formed by a wing (22) that is flat or with minimal dihedral, attached to the vessel (1) by means of two struts (21), with two vertical fins (23) in the form of keels at both tips, which are responsible for the directional stability of the vehicle;

   wherein the front (3) and rear (2) foil sets are positioned longitudinally forward and aft, respectively, of the overall centre of gravity of the vessel, also including the pilot and/or crew.

2. The hydrofoil according to the preceding claim, **characterised in that** both the front wing (32) and the rear wing (22) have a chord of 15 to 25 cm, which allows the wing to go through the dirty area of the water while sailing, as it is the area on the surface providing the greatest stability.

3. The hydrofoil according to any of the preceding claims, **characterised in that** the fins (23) positioned at the end of the wing (22) of the rear foil set (2) are mounted on horizontal masts (24) which are attached to the tips of the wing (22) and which allow the longitudinal location of said fins (23) in more forward or rearward positions with respect to the longitudinal position of the wing (22).

4. The hydrofoil according to any of the preceding claims, **characterised in that** the front (32) and rear (22) wings are straight or flared at the tips.

5. The hydrofoil according to any of the preceding claims, **characterised in that** the span of the wings (32, 22) is comprised between 4 and 8 characteristic chords, or more, in the embodiment of light sailing vessels.

6. The hydrofoil according to any of the preceding claims, **characterised in that** the location of the points for locking the struts (31, 21) to the wings (32, 22) are equidistant with respect to the plane of symmetry of the wing and have a separation between one another of between 2 and 4 characteristic chords.

7. The hydrofoil according to any of the preceding claims, **characterised in that** the front (3) and rear (2) foil sets are installed with a longitudinal separation of between 4 and 8 characteristic chords, and such that the centre of gravity of the vehicle is located between both.

8. The hydrofoil according to any of the preceding claims, **characterised in that** the struts (31, 21) of the front (3) and rear (2) foil sets have a length of between 2 and 6 characteristic chords.

9. The hydrofoil according to any of the preceding claims, **characterised in that** the two front (31) and/or rear (21) struts are optionally replaced with one strut.

10. The hydrofoil according to any of the preceding claims, **characterised in that** the vessel (1) has a control which allows the regulation of the angle of relative incidence of the front wing (32), for the purpose of changing the height of the vehicle above the surface of the water.

Fig. 1

4C-8C

2C-6C

Fig. 2

C

4C-8C

4C-8C

2C-4C

Fig. 3

Fig. 4

Fig. 5

21

22

24

23

## INTERNATIONAL SEARCH REPORT

| International application No. |
| --- |
| PCT/ES2020/070001 |

### A. CLASSIFICATION OF SUBJECT MATTER

**See extra sheet**

According to International Patent Classification (IPC) or to both national classification and IPC

### B. FIELDS SEARCHED

Minimum documentation searched (classification system followed by classification symbols)
B63B

Documentation searched other than minimum documentation to the extent that such documents are included in the fields searched

Electronic data base consulted during the international search (name of data base and, where practicable, search terms used)

EPODOC, INVENES

### C. DOCUMENTS CONSIDERED TO BE RELEVANT

| Category* | Citation of document, with indication, where appropriate, of the relevant passages | Relevant to claim No. |
| --- | --- | --- |
| A | US 2015083034 A1 (HOWES JONATHAN SEBASTIAN) 26/03/2015, figures. | 1 |
| A | US 2008305698 A1 (ROSIELLO KEITH M) 11/12/2008, figures. | 1 |
| A | US 3747138 A (MORGAN D) 24/07/1973, figures. | 1 |
| A | US 2018050768 A1 (AGUERA ALEX LESLIE) 22/02/2018, figures. | 1 |
| A | US 7144285 B1 (HENDRICKS TAREAH JOHN) 05/12/2006, figures. | 1 |
| A | US 7604522 B1 (BURNHAM JR LAWRENCE E) 20/10/2009, figures. | 1 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 08/09/2020 | **(09/09/2020)** |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> D. Herrera Alados <br><br><br> Telephone No. 91 3493412 |

Form PCT/ISA/210 (second sheet) (January 2015)

## INTERNATIONAL SEARCH REPORT

Information on patent family members

| International application No. |
| --- |
| PCT/ES2020/070001 |

| Patent document cited in the search report | Publication date | Patent family member(s) | Publication date |
| --- | --- | --- | --- |
| US2018050768 A1 | 22.02.2018 | US2019127031 A1 | 02.05.2019 |
| | | US10759503 B2 | 01.09.2020 |
| | | CN109415105 A | 01.03.2019 |
| | | AU2017267884 A1 | 15.11.2018 |
| | | AU2017267884B B2 | 05.03.2020 |
| | | US10160525 B2 | 25.12.2018 |
| | | WO2017200611 A1 | 23.11.2017 |
| | | US9789935 B1 | 17.10.2017 |
| US7144285 B1 | 05.12.2006 | NONE | |
| US3747138 A | 24.07.1973 | NONE | |
| US2008305698 A1 | 11.12.2008 | NONE | |
| US7604522 B1 | 20.10.2009 | NONE | |
| US2015083034 A1 | 26.03.2015 | US2011155033 A1 | 30.06.2011 |
| | | US8863681 B2 | 21.10.2014 |
| | | EP2259961 A2 | 15.12.2010 |
| | | EP2259961 B1 | 16.01.2013 |
| | | WO2009118508 A2 | 01.10.2009 |
| | | WO2009118508 A3 | 26.11.2009 |

Form PCT/ISA/210 (patent family annex) (January 2015)

**INTERNATIONAL SEARCH REPORT**

International application No.

PCT/ES2020/070001

**CLASSIFICATION OF SUBJECT MATTER**

*B63B32/60* (2020.01)
*B63B34/40* (2020.01)
*B63B1/24* (2020.01)